(19) Europäisches Patentamt

European Patent Office

Office européen des brevets

(11) **EP 0 464 102 B1**

## (12) EUROPEAN PATENT SPECIFICATION

(45) Date of publication and mention
of the grant of the patent:
**15.10.1997 Bulletin 1997/42**

(21) Application number: **90905249.0**

(22) Date of filing: **22.03.1990**

(51) Int Cl.6: **G06K 9/66**, H04B 3/23

(86) International application number:
**PCT/GB90/00443**

(87) International publication number:
**WO 90/11577 (04.10.1990 Gazette 1990/23)**

(54) **PATTERN RECOGNITION**

MUSTERERKENNUNG

RECONNAISSANCE DES FORMES

(84) Designated Contracting States:
**AT BE CH DE DK ES FR GB IT LI LU NL SE**

(30) Priority: **22.03.1989 GB 8906558**

(43) Date of publication of application:
**08.01.1992 Bulletin 1992/02**

(73) Proprietor: **BRITISH TELECOMMUNICATIONS
public limited company
London EC1A 7AJ (GB)**

(72) Inventor: **TATTERSALL, Graham, David
New House Mill Road
Suffolk IP17 1TH (GB)**

(74) Representative: **Roberts, Simon Christopher et al
BT Group Legal Services,
Intellectual Property Department,
8th Floor, Holborn Centre
120 Holborn
London, EC1N 2TE (GB)**

(56) References cited:
**EP-A- 0 183 389          EP-A- 0 300 648**

• **Computers and Digital Techniques, 2/79, vol. 2
no. 1, pages 29-40: "Guide to pattern recognition
using random access memories", by Aleksander
and Stonham**

**Description**

The present invention is concerned with pattern recognition devices.

Such devices commonly receive, in digital form, an input pattern of bits which is then processed to produce a scalar value, or a number of such values, which are regarded as a vector. These may then be subjected to a thresholding operation to provide an output indicating the nature of an unknown pattern supplied to the device. Many such devices are learning devices, in that they are not constructed to recognise particular patterns but are, before use, supplied with training patterns, the output of the device being compared with information as to the nature of the pattern, or identifying a class to which it belongs, and the comparison result used as feedback to vary parameters stored within the device.

It is convenient to view such systems in terms of an input space and an output space. For example, one which receives a set of five scalar values and produces two scalar values may be considered as performing a mapping from a point in a five-dimensional input pattern space to a point in a two-dimensional output space.

One form of recognition device which has been proposed is the perceptron, which forms one or more weighted sums of a set of input values, the weighting factors being varied adaptively during the learning process. The main disadvantage of these is their inability to perform non-linear mappings from the input space to the output space, so that they cannot learn such apparently simple functions as the exclusive-or function. A solution to this problem is the multi-level percepton, where the output of a first layer of perceptrons supplies the input to a second layer; however, large amounts of training are required in order to learn quite simple non-linear mappings (i.e. convergence is slow), and this has made the application of multi-layer perceptions to real problems such as speech recognition very difficult.

Another form of recognition device is described in our European patent application serial no. 0183389B, and US patent no. 4782459. This, as shown in Figure 1, has an input store 1 in which an input vector having sixteen elements of 8-bits each are stored. Groups ("n-tuples") of bits are taken to form n-bit addresses for each of a number of random access memories 2, and the contents of the memory locations thereby addressed are added in an adder 3 to form a scalar output. During training, this output is compared in a subtractor 4 with the desired output input thereto, and the difference used to control updating of the memory contents. One application of the arrangement shown is as an echo canceller for telecommunications applications where the store 1 is in the form of a shift register receiving successive digitally coded temporal samples of a transmitted signal, the object of the device being to learn a mapping which models the echo characteristics of a transmission path.

As will be explained in greater detail below, the ability of such a recognition device to generalise from examples given in training depends to some extent upon the form in which the input data within the store 1 is coded. It is of course conventional to employ binary coding to represent digital values of a signal, but (as discussed in "Guide to pattern and recognition using random-access memories" - Aleksander and Stonham, computers and digital techniques, February 1979, Vol 2 No 1, Page 36 "6.3 coding of physical data") this is not particularly suitable for this class of pattern recognition devices since signal values which are quite close in signal space are disproportionately far apart in Hamming distance. The authors there propose a Gray code (which employs the same number of bits as the binary code) to overcome this problem but note that this can lead to spurious results as widely differing input signal levels can be close in Hamming distance. They point out that the most suitable coding is a 1-in-N code (hereinafter referred to as a bar code), in which as many bits as there are signal levels are employed. This code suffers from neither of the above drawbacks. It is, however, very inefficient and can require a large amount of input space; for example, for input data having 256 levels (i.e. the typical output of an 8 bit digital to analogue converter), a 256 bit wide input buffer is required - which is clearly impractical (the binary and Gray code versions require only 8 bits, of course).

The present invention therefore provides in a first aspect a pattern recognition apparatus comprising:

an input port for receiving a set of input digital signal values representing a pattern to be recognised;
means for encoding the input digital signal values into coded input signal values to form a digital representation of the received set of input digital signal values;
a plurality of addressable memory devices each having at least one address line for addressing locations therein, the address lines being connected to receive bits from said digital representation; and
means connected to receive digital data signals from said memory devices for producing a composite digital output signal dependant upon data signals read from the addressed locations of the memory devices, said composite output signal indicating the pattern deemed to be recognised;

characterised in that the means for encoding employs a redundant code having a normalised coded input signal value Hamming distance to normalised input signal value distance relationship with a mean slope greater than 1 for input signal value distances up to a predetermined level of at least 10% of the maximum input signal distance.

Another aspect of the present invention provides a pattern recognition apparatus comprising:

an input port for receiving a set of digital signal values representing a pattern to be recognised;

means for encoding the input digital signal values into coded input signal values to form a digital representation of the received set of input digital signal values;

a plurality of memories each having at least one address line for addressing locations therein, the address lines being connected to receive bits from the digital representation of the set of values; and

means for producing a composite output dependent on data read from the addressed locations of the memories, the composite output signal indicating the pattern deemed to be recognised;

characterised in that the means for encoding uses a code employing a number of bits which is:

i) greater than that which a binary code would require to represent an equal number of signal levels; and
ii) less than that number of signal levels;

the normalised coded input signal value Hamming distance to normalised input signal value distance relationship for the code being more monotonic than for the simple binary code.

As will be discussed below, the first aspect of the invention provides a pattern recogniser which has similar properties to a bar code recogniser but is physically practical to construct. The second aspect of the invention, (which preferably employs a coding which as above uses a realistically small number of bits) provides a recognition device which can learn complex mapping functions (as discussed below) yet maintains the good generalisation properties of the bar code type recogniser.

Also provided according to the invention as claimed in claims 12 to 15 is a method of training an n-tuple recogniser using redundant coding of the above types and a method of using such a recogniser. Other preferred features are as recited in the claims.

Some embodiments of the invention will now be described, by way of example, with reference to the accompanying drawings, in which;

Figure 1 as discussed above, shows a known form of pattern recognition device;
Figure 2 shows generally a pattern recognition device according to the invention;
Figure 3 illustrates the concept of an interpolation kernel;
Figures 4a and 4b illustrate 1-in-N or bar coding;
Figure 5a illustrates the kernel function of the coding of Figure 4 in the apparatus of Figure 2;
Figures 5b and 5c show the kernel functions correspondingly obtained employing simple binary coding and Gray coding respectively;
Figure 5d illustrates an example of a kernel obtained employing a code according to the present invention;
Figure 6 illustrates the concept of "badness" employing a first measure;
Figure 7 illustrates a different measure of badness;
Figures 8a and 8b illustrate Hamming distance versus signal distance plots for binary and Gray codes, respectively;
Figures 8c and 8d illustrate corresponding plots for embodiments of the invention; and
Figure 8e illustrates a corresponding plot for a bar code

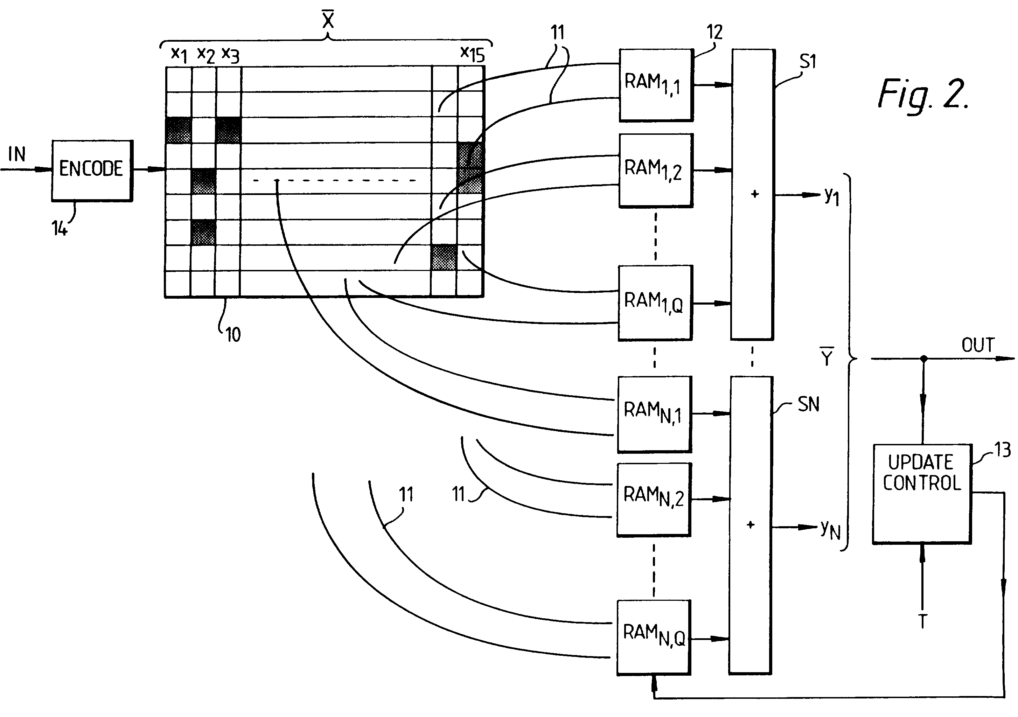

Referring to Figure 2 there is shown a pattern recognition device having an input for receiving a time-varying signal in the form of digital samples. These are divided into frames of (for example) sixteen samples $x_1 ... x_{15}$ (or, in vector notation, X) and stored in a store 10. To avoid confusion, it may be stated that a frame may be regarded as a sixteen element vector (viz. a one-dimensional array or pattern of samples) representing a point in a notional 16-dimensional input space.

Note that the case of a one-dimensional array is by way of example; multi-dimensional arrays (e.g. for image recognition) are equally possible.

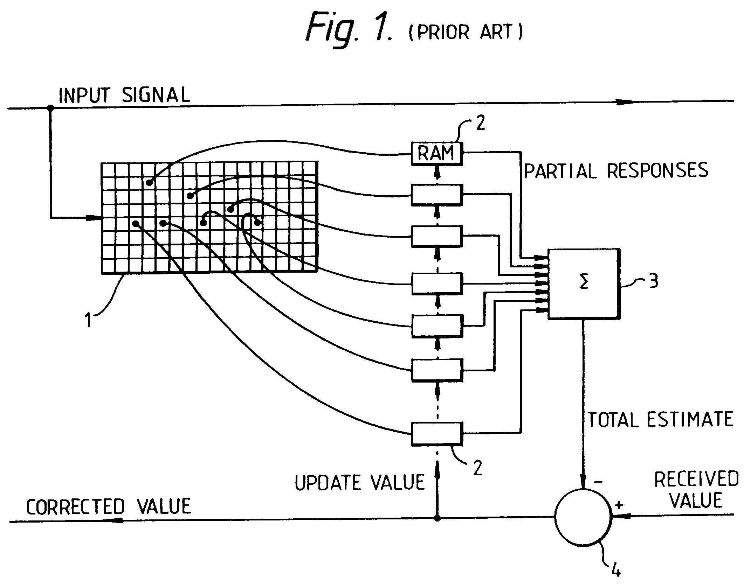

Although, in the example, the input is a one-dimensional array, it is convenient to view the store 10 as two-dimensional since it must accommodate a number of bits for each sample. N-tuple connection lines 11 are, as in Figure 1, connected to the store to form address lines for several banks 12 of memories. The connections are distributed over the bits of the store - i.e. their assignment is uncorrelated with the x-y organisation of the data. Preferably, the assignments are made at random. The memories of the first bank are designated $RAM_{1,1} ... RAM_{1,Q}$ and those of the $N^{th}$ bank $RAM_{N,1} ... RAM_{N,Q}$, there being Q memories in each bank. The outputs of the memories of a bank are added in a respective adder $S_1 ... S_N$ to form an output $y_1 ... y_N$ (which may be regarded as an output vector Y).

The system is trained by applying a vector X to its input. This causes a specific set of n-tuple addresses to be generated, which access corresponding contents in each of the memories. The summation of the output of each bank of memories produces the elements of the output vector Y. This vector is compared in a control unit 13 with a desired output or target vector T and the result used to update the contents of the memory locations $C_{ij}$ of those memory locations addressed by the n-tuple lines ($C_{ij}$ being the content of the addressed location within the $j^{th}$ memory of the

$i^{th}$ bank).

Repeated applications of different training vectors allows the system to learn the required input-output mapping Y = f(X). It is important to notice that with appropriate choice of n-tuple order and number of memories per bank, the system can estimate the best function f(X) to fit a rather sparse training set. That is, it is not necessary to expose the machine to all possible input-output vector pairs because it is able to interpolate the required function between training points. This property will be discussed in more detail later.

Once trained, the device should respond to receipt of an unknown input vector X by producing the desired output vector Y.

It will be seen that one difference between the device shown in Figure 2 and that of Figure 1 is the provision of multiple banks to enable a multi-element output vector to be generated. In addition, however, the device includes an encoder 14 for determining the bits representative of the input samples which are to be entered into the store. Before discussing the form of this in detail, the question of interpolation will be introduced.

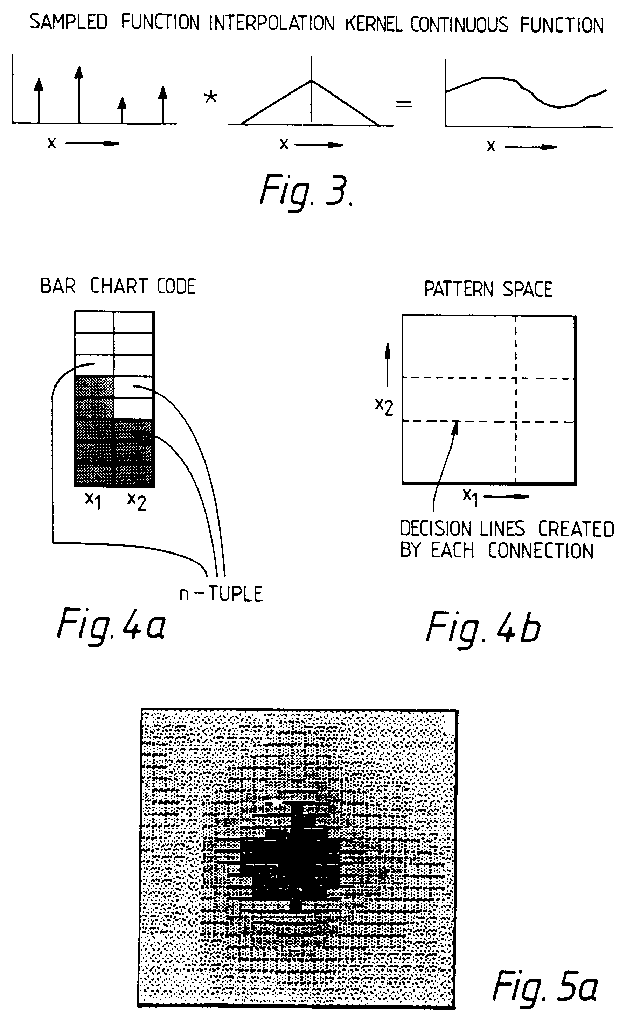

A supervised learning machine is required to learn a mapping function Y = f(X); however, in a practical system, it is not generally possible to expose it to all possible input vectors X, and therefore satisfactory results will be obtained only if the system can interpolate between the training examples which it has been given, i.e. produce the desired response to an input vector which is not one of those used in training. This view of the training results as being a sampled version of the required continuous function leads one to regard the latter as the convolution of the sampled function, and an interpolation kernel. This is illustrated in Figure 3 for the case of a one-dimensional function.

The form of interpolation kernel produced by the device of Figure 2 depends strongly on the way in which the input vector X is coded. Consider a device for which the input vectors X have only two elements; this is easy to visualise as the input pattern space is two-dimensional. Suppose now (for the purposes of illustration) that each element of X is encoded in bar-chart form - i.e. the encoder 14 produces an output bit for every increment of every dimension of X. A typical content of the store 10 for the case of an 8-level signal is shown in Figure 4a for $x_1 = 5$ and $x_2 = 3$; and the corresponding pattern space in Figure 4b. If three memory address lines are connected to the bits shown, then a change in the value in any of those bits causes a change in the address, and hence a change in the contribution of the associated memory to the output of the device. This effectively partitions the input space, as illustrated by the dotted lines in Figure 4b; crossing a threshold line can cause a change in the output Y. Connection of further address lines causes smaller and smaller regions of the pattern space to be delineated.

For this simple two-dimensional case, the interpolation kernel can be plotted as the response of the device when it has been iteratively trained on a single input vector X. Figure 5a shows the output $y_1$ of a device for all points in the pattern space, when trained on a single point in the centre. The device used W = 24 quantisation levels for each dimension, with 4-tuple (n = 4) address connections disposed randomly over the input store. The width of the kernel is large for practical values of n and the number of dimensions in the pattern space, and therefore the complexity of the mapping function that can be learned is quite low. Bar-chart coding produces a large number of coded bits and therefore the size of the input store and the number of memories increases rapidly with the number of input dimensions, so that it is not satisfactory unless the number of input dimensions is low or the desired mapping function is very simple.

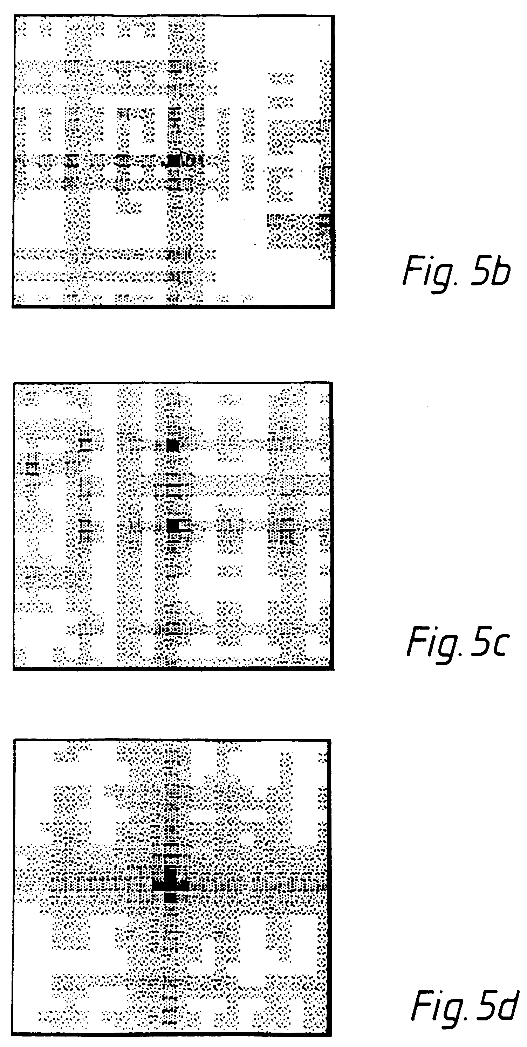

Figures 5b and 5c similarly show the interpolation kernel for the case where X is encoded in 5-bit simple binary and a Gray code respectively. The irregularity of the kernel is evident, though the centre of the kernel is much narrower than the bar-chart case.

The output from the device is, as one moves within the pattern space, influenced by the number of memories which are still receiving the original address produced by the training pattern. Loosely speaking, the probability of the n-tuple address changing value is proportional to the Hamming distance between the current input vector and the original training vector. It is believed that bar-chart coding gives a regular interpolation kernel because the relationship between signal distance (i.e. the difference between the actual values represented) and the Hamming distance between the corresponding encoded values is monotonic, whereas this is not so for simple binary (see Figure 5b), or Gray code, although the latter is better than the former in that the Hamming distance changes only by 1 for every unit change in input value.

Perfect monotonicity in the relationship between Hamming and signal distance can be obtained only by the use of highly redundant codes (such as bar-chart coding) having one bit for each signal level represented. The encoder 14 aims to provide an improved interpolation kernel by encoding the input values using a redundant code which is, however, shorter than with the bar code.

Typically, the encoder is a ROM device, to the address lines of which the input signal bits are applied and from the data lines of which the codeword, stored at the address corresponding to that combination of input bits, may be read.

One simple way of doing this is to use a code which represents each input value, by the concatenation of several shifted versions of a Gray code, thereby causing some averaging of the irregularities. One possible composite code is set out below in Table 1.

## TABLE 1

| SIG | CODE |
|-----|------|
| 0 | 000000010011 |
| 1 | 000100110010 |
| 2 | 001100100111 |
| 3 | 001001100111 |
| 4 | 011001110101 |
| 5 | 011101010100 |
| 6 | 010101001100 |
| 7 | 010011001101 |
| 8 | 110011011111 |
| 9 | 110111111110 |
| 10 | 111111101010 |
| 11 | 111010101011 |
| 12 | 101010111001 |
| 13 | 101110011000 |
| 14 | 100110000000 |
| 15 | 100000000001 |

The kernel function obtained using this code for the two-element vector case is shown, in the same format as previously, in Figure 5d.

It is believed that the reason that the use of bar chart coding results in a large kernel width is that, in that code, which (assuming linear steps between signal levels) has a linear relationship between Hamming distance and signal distance, the slope of the relationship is relatively low. In the binary code, on the other hand, the slope is relatively steep and the kernel width is small.

Suppose we define a normalised Hamming distance as $d_h' = d_h/d_{hmax}$ where $d_h$ is the actual Hamming distance and $d_{hmax}$ is the maximum Hamming distance for the code under consideration (i.e. the number of bits in the code) and the normalised signal distance as $d_s' = d_s/d_{smax}$ where $d_s$ is the signal distance and $d_{smax}$ is the maximum signal distance for that code. For a 16-level (linear) system, the maximum signal distance is 15; however, for purposes of comparison, it may be preferable to assume the maximum to be 16 (i.e. the number of levels).

Thus the mean slope (as opposed to the instantaneous slope) at any point is $d_h'/d_s'$. It follows from the above that the slope, for small signal levels (e.g. up to 10%, or preferably 15% or even 20 or 25% of the maximum signal distance) is in excess of unity, thereby representing an improvement over the bar-chart case.

In general, the Hamming distance (and hence slope) is not a unique function of signal distance, in that it depends on which signal level one starts from. The above criterion may be taken to indicate that the slope obtained by taking the _average_ of the mean slopes of all possible starting points (in both directions of signal distance) is greater than unity; more preferably, however, the mean slope for each starting point is greater than unity.

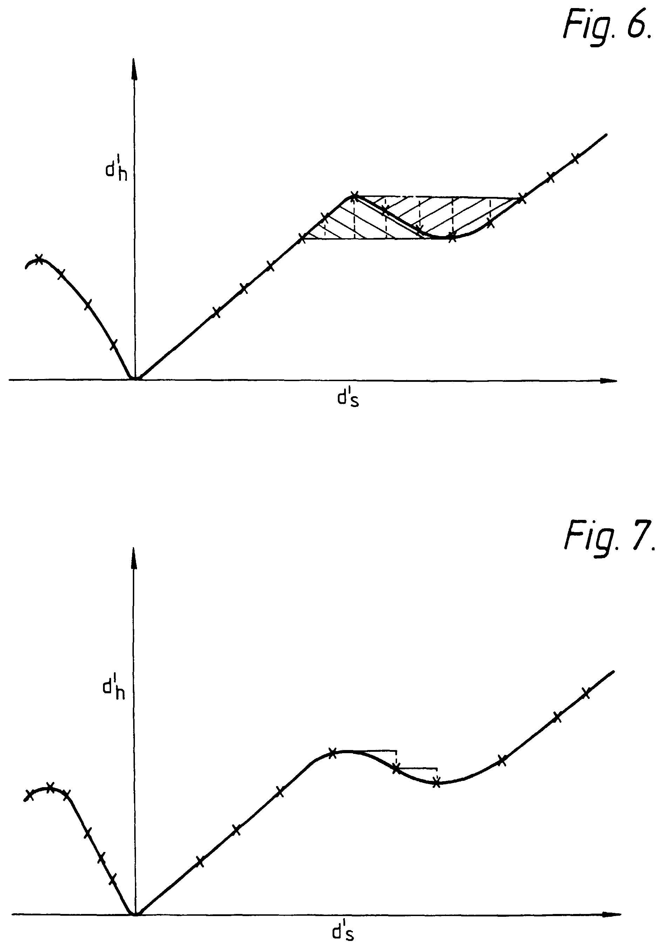

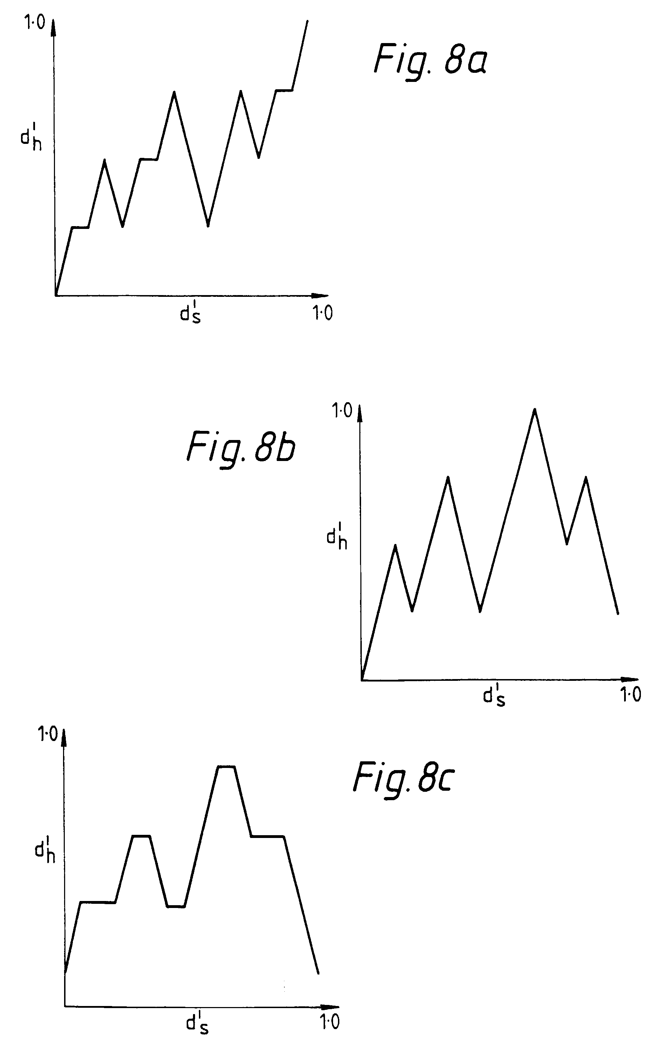

It is also postulated that the 'noise' remote from the centre of the kernel plots shown in Figures 6 to 9 is a result of the non-monotonicity of the Hamming distance/signal distance relationship. It is thus preferable to use codes having a high monotonicity.

Before considering this point, we will consider possible ways in which departure from monotonicity can be measured. Figure 6 shows a hypothetical graph of Hamming distance versus signal distance, starting from some arbitrary signal level. Any point on the plot which has a normalised Hamming distance less than its previous maximum is indicative of a departure from monotonicity, and one possible measure of badness would be the sum of these departures, shown by the dotted lines in Figure 6. One also takes into account signal levels lower than the starting level, as indicated by the left hand half of the graph. The average of these sums, taken over all starting points, is referred here as "Badness 2". This is similar to considering the hatched area in Figure 6 (which may be a viable alternative measure).

Alternatively, one could sum the departures from the previous minimum, proceeding in the negative direction (see chain-dot lines within the cross-hatched area in Figure 10) - or the mean of this and Badness 2.

Another, similar, approach would be to take the sum (Badness 1) of the differences from the immediately preceding point if the latter is higher - i.e. the distances shown dotted in Figure 7. The possibility of upper and lower measures does not arise in this case, since the two would always give the same value.

A further option is to weight the significance of these departures (on the basis that a 'kink' of given absolute size may be more significant at low distances than at high ones) by dividing each difference by the signal distance, before summations, thereby forming a "weighted badness".

To summarise the above, the badness measures may be defined mathematically as

**Badness 1 =**

$$\sum_{j=0}^{dsmax} \left\{ \sum_{i=j+1}^{dsmax} \left\langle d_h'(i-1,j) - d_h'(i,j) \right\rangle + \sum_{i=j-1}^{0} \left\langle d_h'(i+1,j) - d_h'(i,j) \right\rangle \right\}$$

**Weighted Badness 1 =**

$$\sum_{j=0}^{dsmax} \left\{ \sum_{i=j+1}^{dsmax} \left\langle \frac{d_h'(i-1,j) - d_h'(i,j)}{i-j} \right\rangle + \sum_{i=j-1}^{0} \left\langle \frac{d_h'(i+1,j) - d_h'(i,j)}{j-i} \right\rangle \right.$$

**Badness 2 =**

$$\sum_{j=0}^{dsmax} \left\{ \sum_{i=j+1}^{dsmax} \left\langle \hat{d}_h'(i,j) - d_h'(i,j) \right\rangle + \sum_{i=j-1}^{0} \left\langle \hat{d}_h'(i,j) - d_h'(i,j) \right\rangle \right\}$$

**Weighted Badness 2 =**

$$\sum_{j=0}^{dsmax} \left\{ \sum_{i=j+1}^{dsmax} \left\langle \frac{\hat{d}_h'(i,j) - d_h'(i,j)}{i-j} \right\rangle + \sum_{i=j-1}^{0} \left\langle \frac{\hat{d}_h'(i,j) - d_h'(i,j)}{j-i} \right\rangle \right\}$$

Where $d_h'(i,j)$ is the normalised Hamming distance between the codes representing signal levels i and j; $\hat{d}_h'(i,j)$ is the maximum normalised Hamming distance between the code j and any code prior (in the direction of summation) to code j; dsmax is the maximum signal distance (equal to the number of signal levels minus one); and the triangular brackets indicate that negative values are taken to be zero (i.e. $\langle x \rangle = 0$ for $x \leq 0$).

Loosely speaking, monotonicity here has its usual meaning. Where, in the following, exact values are quoted, we define monotonicity as being the reciprocal of the badness.

The following table indicates Badness 1 and Badness 2 figures for a number of 16-level codes. These figures are not normalised, but those having more than four bits are scaled to four bits.

TABLE 2

|  | B1 | B2 |
|---|---|---|
| Four-bit binary | 3.125 | 5.6875 |
| Four-bit Gray | 2.75 | 5.1875 |
| Eight-bit Concatenated Gray (odd shift) | 0.875 | 2.469 |
| Seven-bit Lloyd no. 1 | 1.107 | 1.750 |
| Twelve-bit Concatenated Gray (1,3) | 1.2085 | 2.5835 |
| Twelve-bit Concatenated Gray (+1,+7) | 1.1666 | 2.479 |

Note that the results for concatenated Gray codes depend on the shift(s) used. For the 8-bit code, the results obtained with an odd shift are significantly better than with an even shift.

These figures show that 4-bit Gray code has a better monotonicity than binary. The 12-bit concatenated Gray code (with shifts of (+1,+7) - which were found to give the highest monotonicity figure for that code ) is significantly better, though not as good as the 8-bit concatenated Gray code. The 7-bit Lloyd code was designed (manually) to achieve a good monotonicity, discarding the cyclic property of the Gray code which is not needed for present purposes. It is slightly better or slightly worse than the 8-bit concatenated Gray code, according to which measure one considers. Note that this code is entirely monotonic (with a linear Hamming/signal distance relationship) for signal distances (from any starting value) up to 3 (i.e. 20% of the maximum signal distance of 15). With a small modification (1111011 for signal level 12) this limit is increased to 4.

The codes are set out below (Table 3).

## TABLE 3

### BINARY 4-BIT(Fig.8a)          GRAY(Fig.8b)

| SIG | CODE | SIG | CODE |
|-----|------|-----|------|
| 0 | 0000 | 0 | 0000 |
| 1 | 0001 | 1 | 0001 |
| 2 | 0010 | 2 | 0011 |
| 3 | 0011 | 3 | 0010 |
| 4 | 0100 | 4 | 0110 |
| 5 | 0101 | 5 | 0111 |
| 6 | 0110 | 6 | 0101 |
| 7 | 0111 | 7 | 0100 |
| 8 | 1000 | 8 | 1100 |
| 9 | 1001 | 9 | 1101 |
| 10 | 1010 | 10 | 1111 |
| 11 | 1011 | 11 | 1110 |
| 12 | 1100 | 12 | 1010 |
| 13 | 1101 | 13 | 1011 |
| 14 | 1110 | 14 | 1001 |
| 15 | 1111 | 15 | 1000 |

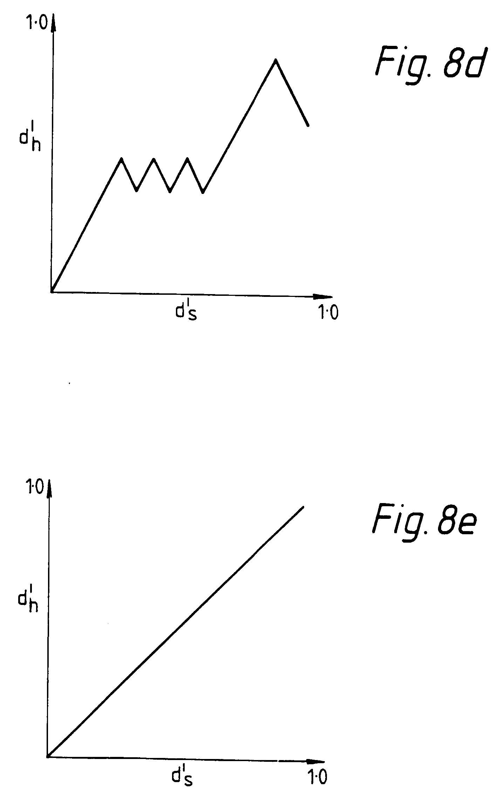

CONCATENATED (8 BIT)GRAY(Fig.8c)    LLOYD (Fig.8d)

| SIG | CODE | SIG | CODE |
|---|---|---|---|
| 0 | 00000001 | 0 | 0000000 |
| 1 | 00010011 | 1 | 0000001 |
| 2 | 00110010 | 2 | 0000011 |
| 3 | 00100110 | 3 | 0000111 |
| 4 | 01100111 | 4 | 0001111 |
| 5 | 01110101 | 5 | 0001110 |
| 6 | 01010100 | 6 | 0011110 |
| 7 | 01001100 | 7 | 0011100 |
| 8 | 11001101 | 8 | 0111100 |
| 9 | 11011111 | 9 | 0111000 |
| 10 | 11111110 | 10 | 1111000 |
| 11 | 11101010 | 11 | 1111001 |
| 12 | 10101011 | 12 | 1111101 |
| 13 | 10111001 | 13 | 1111111 |
| 14 | 10011000 | 14 | 1110111 |
| 15 | 10000000 | 15 | 1110110 |

Figures 8a-8d illustrate these codes as (normalised) Hamming distance against Signal distance (from 0) plots. The bar code is also illustrated for comparison (Figure. 8e)

In general, the monotonicity of the code used is greater than that of the binary code representing the same number of signal levels; preferably, it is at least 1.5 or twice that figure.

It is expected that a concatenation of shifted binary codes will have poor monotonicity and that the codes used preferably exceed to the desired extent that of such a code.

The means adopted by the control unit - for adaptively adjusting the contents of the memories - during the learning phase will now be discussed.

The adaptation of the RAM memory contents to develop the required mapping function may be done using a gradient descent procedure. It can be shown that the gradient is very easily calculated and that the error surface for the system is quadratic thereby indicating that convergence is always possible.

Each memory in the system is addressed by an n-tuple address whose value depends on the input vector X. Thus, the output of each memory in the system depends in some complex way on X, and in general the output of the $j^{th}$ memory in the $i^{th}$ bank can be expressed as $C_{ij}(X)$.

The output of the $i^{th}$ bank is then:

$$y_i = \sum_{j=i}^{Q} C_{ij}(X) \qquad \qquad \dots (1)$$

where Q is the number of memories per bank.

Let the target output vector when X is input be $T = [t_1 \dots t_N]$. The mean square output error of the system can then be expressed as:

$$\overline{E^2} = \frac{1}{N} \sum_{i=1}^{N} (y_i - t_i)^2 \qquad \qquad \dots (2)$$

Substituting (1) into (2) gives an expression for the mean square error in terms of the contents of the memories:

$$\overline{E^2} = \frac{1}{N} \sum_{i=1}^{N} \left\{ \sum_{j=1}^{Q} C_{ij} (X) - t_i \right\}^2 \qquad \ldots (3)$$

Equation 3 shows that the highest power term involving $C_{ij}(X)$ in the expression for mean square error is two. This indicates a single minimum, quadratic surface, and so convergence to a global optimum is guaranteed using a gradient algorithm.

The gradient descent algorithm operates on the currently addressed memory contents such that:

$$C_{ij}^{n+1} (X) = C_{ij}^{n} (X) + k . \frac{\partial \overline{E}^2}{\partial C_{ij}^{n}(X)} \qquad (4)$$

where $k (k \leq 1)$ is a constant determining the rate of convergence.

The gradient term required in (4) is simply calculated from (3) as:

$$\frac{\overline{\Delta E}^2}{\Delta C_{ij}^{n} (X)} = 2 . (y_i - t_i) = 2e_i$$

where $e_i$ is the difference between the output of the $i^{th}$ bank and its target value. So, the algorithm for modifying the contents becomes:

$$C_{ij}^{n+1} (X) = C_{ij}^{n} (X) + 2k . (y_i - t_i) \qquad (5)$$

If a sufficiently large number of training patterns is available, a single exposure to each may be sufficient. In practice, however, it will usually be necessary to expose the system repeatedly to the training set, until convergence to a desired level of error is obtained.

It may be found advantageous to vary, in successive passes, the order in which the training patterns are presented.

**Claims**

1. A pattern recognition apparatus comprising:

   an input port for receiving a set of input digital signal values representing a pattern to be recognised;
   means for encoding the input digital signal values into coded input signal values to form a digital representation of the received set of input digital signal values;
   a plurality of addressable memory devices each having at least one address line for addressing locations therein, the address lines being connected to receive bits from said digital representation; and
   means connected to receive digital data signals from said memory devices for producing a composite digital output signal dependant upon data signals read from the addressed locations of the memory devices, said composite output signal indicating the pattern deemed to be recognised;

   characterised in that the means for encoding employs a redundant code having a normalised coded input signal value Hamming distance to normalised input signal value distance relationship with a mean slope greater than 1 for input signal value distances up to a predetermined level of at least 10% of the maximum input signal distance.

2. An apparatus according to claim 1, in which the slope is at least 1.5.

3. An apparatus according to claim 1, in which the slope is at least 2.

4. An apparatus according to claim 2, or 3, in which the predetermined level is 15%.

5. An apparatus according to claims 2, or 3, in which the predetermined level is 20%.

6. An apparatus according to claims 2, or 3, in which the predetermined level is 25%.

7. An apparatus according to any one of the preceding claims in which the code employs a number of bits which is:

   i) greater than that which a simple binary code would require to represent an equal number of signal levels; and
   ii) less than that number of signal levels;

   the normalised coded input signal value Hamming distance to normalised input signal value distance relationship for the code being more monotonic than for the simple binary code.

8. A pattern recognition apparatus comprising:

   an input port for receiving a set of digital signal values representing a pattern to be recognised;
   means for encoding the input digital signal values into coded input signal values to form a digital representation of the received set of input digital signal values;
   a plurality of memories each having at least one address line for addressing locations therein, the address lines being connected to receive bits from the digital representation of the set of values; and
   means for producing a composite output dependent on data read from the addressed locations of the memories, the composite output signal indicating the pattern deemed to be recognised;

   characterised in that the means for encoding uses a code employing a number of bits which is:

   i) greater than that which a simple binary code would require to represent an equal number of signal levels; and
   ii) less than that number of signal levels;

   the normalised coded input signal value Hamming distance to normalised input signal value distance relationship for the code being more monotonic than for the simple binary code.

9. An apparatus according to claim 7 or 8, in which the code is at least 1.5 times more monotonic than the simple binary code.

10. An apparatus according to claim 9, in which the code is at least twice as monotonic as the simple binary code.

11. An apparatus according to any one of the preceding claims, in which the means for producing a composite output comprise a plurality of combining circuits, each connected to a different plurality of the said memories, each being arranged to produce a scalar output in dependence upon the data read from the addressed locations of those memories to which it is connected, the composite output being a vector including said scalar outputs.

12. A method of training a pattern recognition device which is arranged to receive a set of input digital values representing a pattern to be recognised, comprising:

   receiving a set of input digital values representing a pattern to be recognised;
   encoding the input digital signal values into coded input signal values to form a digital representation of the received set of input digital signal values;
   addressing a plurality of digital signal storage devices each having at least one address line for addressing locations therein, the address lines receiving bits from said digital representation; and
   receiving digital data signals from said memory devices and producing a composite digital output signal dependent on the data signals read from the address locations of the memory devices;
   comparing the composite digital output signal with a desired output and, on the basis of the comparison, updating the contents of the addressed locations of the digital signal storage devices;

   characterised in that the step of encoding said values employs a redundant code which has a normalised Hamming distance to normalised signal distance relationship having a mean slope greater than 1 for signal distances up to a predetermined level of at least 10% of the maximum signal distance.

13. A method of training a pattern recognition device which is arranged to receive a set of input digital values representing a pattern to be recognised, comprising:

receiving a set of input digital values representing a pattern to be recognised;
encoding the input digital signal values into coded input signal values to form a digital representation of the received set of input digital signal values;
addressing a plurality of digital signal storage devices each having at least one address line for addressing locations therein, the address lines receiving bits from said digital representation; and
receiving digital data signals from said memory devices and producing a composite digital output signal dependent on the data signals read from the address locations of the memory devices;
comparing the composite digital output signal with a desired output and, on the basis of the comparison, updating the contents of the addressed locations of the digital signal storage devices;

characterised in that the step of encoding said values uses a code employing a number of bits which is

i) greater than that which the simple binary code would require to represent an equal number of signal levels; and
ii) less than that number of signal levels;

the normalised coded input signal value Hamming distance to normalised input signal value distance relationship for the code being more monotonic than for the simple binary code.

14. A method of pattern recognition comprising:

receiving a set of digital input values representing a pattern to be recognised;
encoding the input digital signal values into coded input signal values to form a digital representation of the received set of input digital signal values;
addressing a plurality of digital signal storage devices each having at least one address line for addressing locations therein, the address lines receiving bits from said digital representation; and
receiving digital data signals from said memory devices and producing a composite digital output signal dependent on the data signals read from the address locations of the memory devices;

characterised in that the step of encoding said values employs a redundant code which has a normalised Hamming distance to normalised signal distance relationship having a mean slope greater than 1 for signal distances up to a predetermined level of at least 10% of the maximum signal distance.

15. A method of pattern recognition comprising:

receiving a set of input digital values representing a pattern to be recognised;
encoding the input digital signal values into coded input signal values to form a digital representation of the received set of input digital signal values;
addressing a plurality of digital signal storage devices each having at least one address line for addressing locations therein, the address lines receiving bits from said digital representation; and
receiving digital data signals from said memory devices and producing a composite digital output signal dependent on the data signals read from the address locations of the memory devices;

characterised in that the step of encoding said values uses a code employing a number of bits which is

i) greater than that which the simple binary code would require to represent an equal number of signal levels; and
ii) less than that number of signal levels;

the normalised coded input signal value Hamming distance to normalised input signal value distance relationship for the code being more monotonic than for the simple binary code.

**Patentansprüche**

1. Mustererkennungsvorrichtung mit

einem Eingangsanschluß zum Empfangen eines Satzes von Eingangsdigitalsignalwerten, die ein zu erkennendes Muster repräsentieren;

Mitteln zum Verschlüsseln der Eingangsdigitalsignalwerte in kodierte Eingangssignalwerte zum Bilden eines Digitaläquivalents des empfangenen Satzes von Eingangsdigitalsignalwerten;

mehreren adressierbaren Speichervorrichtungen, die zumindest eine Adreßleitung zum Adressieren von Adreßstellen in derselben aufweisen, wobei die Adreßleitungen derart verbunden sind, daß sie Bits von dem Digitaläquivalent empfangen können und

Mitteln, die zum Empfangen von Digitaldatensignalen von den Speichervorrichtungen verbunden sind zum Erzeugen eines zusammengesetzten Digitalausgangssignals abhängig von den Datensignalen, die von den adressierten Speicherstellen der Speichervorrichtungen gelesen werden, wobei das zusammengesetzte Ausgangssignal das zu erkennen geglaubte Muster angibt;

dadurch gekennzeichnet, daß die Mittel zum Entschlüsseln einen redundanten Code anwenden, der ein Verhältnis zwischen einem normalisierten kodierten Eingangssignalwert-Hamming-Abstand und dem normalisierten Eingangssignalwertabstand mit einer mittleren Steigung aufweist, die größer ist als 1 für Eingangssignalwertabstände bis zu einem vorbestimmten Niveau von zumindest 10 % des Maximaleingangssignalabstands.

2. Vorrichtung nach Anspruch 1, in der die Steigung zumindest 1,5 ist.

3. Vorrichtung nach Anspruch 1, in der die Steigung zumindest 2 ist.

4. Vorrichtung nach Anspruch 2 oder 3, in der das vorbestimmte Niveau 15 % ist.

5. Vorrichtung nach Anspruch 2, oder 3, in der das vorbestimmte Niveau 20 % ist.

6. Vorrichtung nach Anspruch 2, oder 3 in der das vorbestimmte Niveau 25 % ist.

7. Vorrichtung nach irgendeinem der vorangehenden Ansprüche, in der der Code eine Anzahl von Bits verwendet, die

i) größer ist als der Wert, der ein einfacher Binärcode erfordern würde, um eine gleiche Anzahl von Signalniveaus zu repräsentieren und

ii) kleiner ist als die Anzahl von Signalniveaus; wobei das Verhältnis des normalisierten kodierten Eingangssignalwert-Hamming-Abstands zu dem normalisierten Eingangssignalwertabstand für den Code monotoner ist als für den einfachen Binärcode.

8. Mustererkennungsvorrichtung mit

einem Eingangsanschluß zum Empfangen eines Satzes von Digitalsignalwerten, die ein zu erkennendes Muster repräsentieren;

Mitteln zum Kodieren der Eingangsdigitalsignalwerte in kodierte Eingangssignalwerte zum Bilden eines Digitaläquivalents des empfangenen Satzes von Eingangsdigitalsignalwerten;

mehreren Speichern, die zumindest eine Adreßleitung zum Adressieren von Adreßstellen in denselben aufweisen, wobei die Adreßleitungen zum Empfangen von Bits von dem Digitaläquivalent des Satzes von Werten verbunden sind und

Mitteln zum Erzeugen eines zusammengesetzten Ausgangs abhängig von gelesenen Daten von den adressierten Speicherstellen des Speichers, wobei das zusammengesetzte Ausgangssignal das zu erkennen geglaubte Muster angibt; dadurch gekennzeichnet, daß die Mittel zum Kodieren einen Code verwenden, der eine Anzahl von Bits anwendet, die

i) größer ist als die Anzahl, die ein einfacher Binärcode erfordern würde, um eine gleiche Anzahl von Signalniveaus zu repräsentieren und

ii) kleiner ist als die Anzahl von Signalniveaus, wobei das Verhältnis zwischen dem normalisierten kodierten Eingangssignalwert-Hamming-Abstand zu dem normalisierten Eingangssignalwertabstand für den Code monotoner ist als für den einfachen Binärcode.

9. Vorrichtung nach Anspruch 7 oder 8, in der der Code zumindest 1,5mal monotoner ist als der einfache Binärcode.

10. Vorrichtung nach Anspruch 9, in der der Code zumindest 2mal monotoner ist als der einfache Binärcode.

11. Vorrichtung nach irgendeinem der vorangehenden Ansprüche, in der die Mittel zum Erzeugen eines zusammengesetzten Ausgangs mehrere kombinierte Schaltungen enthalten, die mit einer unterschiedlichen Mehrzahl von Speichern verbunden sind, welche zum Erzeugen eines skalaren Ausgangs in Abhängigkeit von den von den adressierten Speicherstellen gelesenen Daten der Speicher angeordnet sind, mit denen diese verbunden sind, wobei der zusammengesetzte Ausgang ein Vektor ist, der die skalaren Ausgänge enthält.

12. Verfahren zum Trainieren einer Mustererkennungsvorrichtung, die zum Empfangen eines Satzes von Eingangsdigitalwerten angeordnet ist, die ein zu erkennendes Muster repräsentieren, mit den Schritten:

Empfangen eines Satzes von Eingangsdigitalwerten, die ein zu erkennendes Muster repräsentieren;
Kodieren der Eingangsdigitalsignalwerte in kodierte Eingangssignalwerte, um ein Digitaläquivalent des empfangenen Satzes von Eingangsdigitalsignalwerten zu bilden;
Adressieren von mehreren Digitalsignalspeichervorrichtungen, die zumindest eine Adreßleitung zum Adressieren von Speicherstellen in derselben aufweisen, wobei die Adreßleitungen Bits von dem digitalen Äquivalent erhalten und
Empfangen von digitalen Datensignalen von den Speichervorrichtungen und Erzeugen eines zusammengesetzten Digitalausgangssignals abhängig von den Datensignalen, die von den Speicherstellen der Speichervorrichtungen gelesen werden;
Vergleichen des zusammengesetzten Digitalausgangssignals mit einem gewünschten Ausgang und, basierend auf dem Vergleich, Erneuern der Inhalte der adressierten Speicherstellen der digitalen Signalspeichervorrichtungen;

dadurch gekennzeichnet, daß der Schritt des Kodierens der Werte einen redundanten Code anwendet, der ein Verhältnis zwischen einem normalisierten Hamming-Abstand zu einem normalisierten Signalabstand mit einer mittleren Steigung aufweist, die größer ist als 1 für Signalabstände bis zu einem vorbestimmten Niveau von zumindest 10 % des maximalen Signalabstands.

13. Verfahren zum Trainieren einer Mustererkennungsvorrichtung, die zum Empfangen eines Satzes von Eingangsdigitalwerten angeordnet ist, die ein zu erkennendes Muster repräsentieren, mit den Schritten:

Empfangen eines Satzes von Eingangsdigitalwerten, die ein zu erkennendes Muster repräsentieren;
Kodieren der Eingangsdigitalsignalwerte in kodierte Eingangssignalwerte zum Bilden eines Digitaläquivalents des empfangenen Satzes von Eingangsdigitalsignalwerten;
Adressieren von mehreren Digitalsignalspeichervorrichtungen, die zumindest eine Adreßleitung zum Adressieren von Speicherstellen in denselben aufweisen, wobei die Adreßleitungen Bits von dem Digitaläquivalent empfangen und
Empfangen von digitalen Datensignalen von den Speichervorrichtungen und Erzeugen eines zusammengesetzten Digitalausgangssignals abhängig von den Datensignalen, die von den Adreßstellen der Speichervorrichtungen gelesen werden;
Vergleichen des zusammengesetzten Digitalausgangssignals mit einem gewünschten Ausgang und, basierend auf dem Vergleich, Erneuern der Inhalte der adressierten Speicherstellen der Digitalsignalspeichervorrichtungen;

dadurch gekennzeichnet, daß der Schritt des Kodierens der Werte einen Code verwendet, der eine Anzahl von Bits anwendet, die

i) größer ist als eine Anzahl, die der einfache Binärcode benötigen würde, um eine gleiche Anzahl von Signalniveaus zu repräsentieren und
ii) kleiner ist als die Anzahl von Signalniveaus;

wobei das Verhältnis zwischen dem normalisierten kodierten Eingangssignalwert-Hamming-Abstand zu dem normalisierten Eingangssignalwertabstand für den Code monotoner ist als für den einfachen Binärcode.

14. Verfahren zur Mustererkennung mit den Schritten:

Empfangen eines Satzes von Digitaleingangswerten, die ein zu erkennendes Muster repräsentieren;
Kodieren der Eingangsdigitalsignalwerte in kodierte Eingangssignalwerte, um ein Digitaläquivalent des empfangenen Satzes von Eingangsdigitalsignalwerten zu bilden;

Adressieren von mehreren Digitalsignalspeichervorrichtungen, die zumindest eine Adreßleitung zum Adressieren von Speicherstellen in denselben aufweisen, wobei die Adreßleitungen Bits von dem Digitaläquivalent empfangen und

Empfangen von digitalen Datensignalen von den Speichervorrichtungen und Erzeugen eines zusammengesetzten Digitalausgangssignals abhängig von den Datensignalen, die von den Adreßstellen der Speichervorrichtungen gelesen werden;

dadurch gekennzeichnet, daß der Schritt des Kodierens der Werte einen redundanten Code verwendet, der ein Verhältnis zwischen einem normalisierten Hamming-Abstand zu einem normalisierten Signalabstand mit einer mittleren Steigung aufweist, die kleiner ist als 1 für Signalabstände bis zu einem vorbestimmten Niveau von zumindest 10 % des maximalen Signalabstands.

15. Verfahren zur Mustererkennung mit den Schritten:

Empfangen eines Satzes von Eingangsdigitalwerten, die ein zu erkennendes Muster repräsentieren;
Kodieren der Eingangsdigitalsignalwerte in kodierte Eingangssignalwerte zum Bilden eines Digitaläquivalents des empfangenen Satzes von Eingangsdigitalsignalwerten;
Adressieren von mehreren Digitalsignalspeichervorrichtungen, die zumindest eine Adreßleitung zum Adressieren von Speicherstellen in denselben aufweisen, wobei die Adreßleitungen Bits von dem Digitaläquivalent erhalten und
Empfangen von Digitaldatensignalen von den Speichervorrichtungen und Erzeugen eines zusammengesetzten Digitalausgangssignals abhängig von den Datensignalen, die von den Adreßstellen der Speichervorrichtungen gelesen werden;

dadurch gekennzeichnet, daß der Schritt des Kodierens der Werte einen Code verwendet, der eine Anzahl von Bits anwendet, die

i) größer ist als die Anzahl, die der einfache Binärcode benötigen würde, um eine gleiche Anzahl von Signalniveaus zu repräsentieren und
ii) kleiner ist als die Anzahl von Signalniveaus;

wobei das Verhältnis zwischen dem normalisierten kodierten Eingangssignalwert-Hamming-Abstand zu dem normalisierten Eingangssignalwertabstand für den Code monotoner ist als für den einfachen Binärcode.

## Revendications

1. Appareil de reconnaissance des formes comprenant :

un port d'entrée destiné à recevoir un ensemble de valeurs dans un signal numérique entrant qui représentent une forme à reconnaître ;
des moyens servant à coder les valeurs du signal numérique entrant pour obtenir des valeurs dans un signal entrant codé qui constituent une représentation numérique de l'ensemble reçu de valeurs dans le signal numérique entrant ;
un ensemble de dispositifs à mémoire adressables possédant tous au moins une ligne d'adresse permettant d'atteindre des adresses locales incluses, ces lignes d'adresse étant reliées de façon à pouvoir recevoir des bits de la part de ladite représentation numérique ; et
des moyens reliés de façon à pouvoir recevoir des signaux de données numériques de la part des dits dispositifs à mémoire servant à produire un signal de sortie numérique composé qui est fonction des signaux d'entrée lus sur les adresses locales des dispositifs à mémoire, ledit signal de sortie composé indiquant quelle forme on estime devoir reconnaître ;

caractérisé en ce que les moyens de codage emploient un code redondant tel que la relation fonctionnelle entre la distance de Hamming normalisée des valeurs du signal d'entrée codé, et la distance normalisée des valeurs du signal d'entrée, présente une pente moyenne qui est supérieure à 1 pour des distances de valeurs dans le signal d'entrée s'élevant jusqu'à un niveau choisi à l'avance et au moins égal à 10% de la distance de signal d'entrée maximale.

**2.** Appareil selon la revendication 1, où la pente est au moins égale à 1,5.

**3.** Appareil selon la revendication 1, où la pente est au moins égale à 2.

**4.** Appareil selon la revendication 2 ou 3, où le niveau choisi à l'avance est de 15%.

**5.** Appareil selon la revendication 2 ou 3, où le niveau choisi à l'avance est de 20%.

**6.** Appareil selon la revendication 2 ou 3, où le niveau choisi à l'avance est de 25%.

**7.** Appareil selon l'une quelconque des revendications précédentes, où le code emploie un nombre de bits qui est :

i) supérieur à celui requis par un simple code binaire pour représenter le même nombre de niveaux de signal ; et
ii) inférieur à ce nombre de niveaux de signal ;

la relation fonctionnelle pour ce code entre la distance de Hamming normalisée des valeurs du signal d'entrée codé, et la distance normalisée des valeurs du signal d'entrée, étant plus monotone que dans le cas du simple code binaire.

**8.** Appareil de reconnaissance des formes comprenant :

un port d'entrée destiné à recevoir un ensemble de valeurs dans un signal numérique qui représentent une forme à reconnaître ;
des moyens servant à coder les valeurs du signal numérique entrant pour obtenir des valeurs dans un signal entrant codé qui constituent une représentation numérique de l'ensemble reçu de valeurs dans le signal numérique entrant;
un ensemble de mémoires possédant toutes au moins une ligne d'adresse permettant d'atteindre des adresses locales incluses, ces lignes d'adresse étant reliées de façon à pouvoir recevoir des bits de la part de la représentation numérique de l'ensemble de valeurs; et
des moyens servant à produire un signal de sortie numérique composé qui est fonction des données lues sur les adresses locales des mémoires, le signal de sortie composé indiquant quelle forme on estime devoir reconnaître ;

caractérisé en ce que les moyens d'encodage utilisent un code employant un nombre de bits qui est :

i) supérieur à celui requis par un simple code binaire pour représenter le même nombre de niveaux de signal ; et
ii) inférieur à ce nombre de niveaux de signal ;

la relation fonctionnelle pour ce code entre la distance de Hamming normalisée des valeurs du signal d'entrée codé, et la distance normalisée des valeurs du signal d'entrée, étant plus monotone que dans le cas du simple code binaire.

**9.** Appareil selon la revendication 7 ou la revendication 8, où le code est au moins 1,5 fois plus monotone que le simple code binaire.

**10.** Appareil selon la revendication 9, où le code est au moins deux fois plus monotone que le simple code binaire.

**11.** Appareil selon l'une quelconque des revendications précédentes, où les moyens servant à produire un signal de sortie composé comprennent un ensemble de circuits de combinaison, chacun relié à un ensemble différent des dites mémoires, et chacun étant agencé de façon à produire une valeur de sortie scalaire qui est fonction des données lues dans les adresses localisées des mémoires auxquelles il est relié, le signal de sortie composé étant un vecteur incluant les valeurs de sortie scalaires.

**12.** Méthode d'instruction pour dispositif de reconnaissance des formes qui est agencé pour recevoir un ensemble de valeurs numériques d'entrée représentant une forme à reconnaître, comprenant :

la réception d'un ensemble de valeurs numériques d'entrée représentant une forme à reconnaître ;
le codage des valeurs du signal numérique entrant pour obtenir des valeurs dans un signal entrant codé qui constituent une représentation numérique de l'ensemble reçu de valeurs dans le signal numérique entrant ;
l'adressage d'un ensemble de dispositifs de mémorisation de signaux numériques possédant chacun au moins une ligne d'adresse permettant d'atteindre des adresses locales incluses, ces lignes d'adresse recevant des bits de la part de ladite représentation numérique ; et

la réception de signaux de données numériques de la part des dits dispositifs à mémoire, et la production d'un signal de sortie numérique composé qui est fonction des signaux d'entrée lus sur les adresses locales des dispositifs à mémoire ;

la comparaison du signal de sortie numérique composé avec le signal de sortie recherché et, sur la base de cette comparaison, la mise à jour du contenu des adresses locales des dispositifs de mémorisation de signaux numériques ;

caractérisé en ce que l'étape de codage des dites valeurs emploie un code redondant tel que la relation fonctionnelle entre la distance de Hamming normalisée et la distance de signal normalisée, présente une pente moyenne qui est supérieure à 1 pour des distances de signal s'élevant jusqu'à un niveau choisi à l'avance et au moins égal à 10% de la distance de signal maximale.

13. Méthode d'instruction pour dispositif de reconnaissance des formes qui est agencé pour recevoir un ensemble de valeurs numériques d'entrée représentant une forme à reconnaître, comprenant :

la réception d'un ensemble de valeurs numériques d'entrée représentant une forme à reconnaître ;
le codage des valeurs du signal numérique entrant pour obtenir des valeurs dans un signal entrant codé qui constituent une représentation numérique de l'ensemble reçu de valeurs dans le signal numérique entrant ;
l'adressage d'un ensemble de dispositifs de mémorisation de signaux numériques possédant chacun au moins une ligne d'adresse permettant d'atteindre des adresses locales incluses, ces lignes d'adresse recevant des bits de la part de ladite représentation numérique ; et
la réception de signaux de données numériques de la part des dits dispositifs à mémoire, et la production d'un signal de sortie numérique composé qui est fonction des signaux d'entrée lus sur les adresses locales des dispositifs à mémoire ;

la comparaison du signal de sortie numérique composé avec le signal de sortie recherché et, sur la base de cette comparaison, la mise à jour du contenu des adresses locales des dispositifs de mémorisation de signaux numériques ;

caractérisé en ce que l'étape de codage des dites valeurs utilise un code employant un nombre de bits qui est

i) supérieur à celui requis par un simple code binaire pour représenter le même nombre de niveaux de signal ; et
ii) inférieur à ce nombre de niveaux de signal ;

la relation fonctionnelle pour ce code entre la distance de Hamming normalisée des valeurs du signal d'entrée codé, et la distance normalisée des valeurs du signal d'entrée, étant plus monotone que dans le cas du simple code binaire.

14. Méthode de reconnaissance des formes, comprenant :

. la réception d'un ensemble de valeurs numériques d'entrée représentant une forme à reconnaître ;
le codage des valeurs du signal numérique entrant pour obtenir des valeurs dans un signal entrant codé qui constituent une représentation numérique de l'ensemble reçu de valeurs dans le signal numérique entrant ;
l'adressage d'un ensemble de dispositifs de mémorisation de signaux numériques possédant chacun au moins une ligne d'adresse permettant d'atteindre des adresses locales incluses, ces lignes d'adresse recevant des bits de la part de ladite représentation numérique ; et
la réception de signaux de données numériques de la part des dits dispositifs à mémoire, et la production d'un signal de sortie numérique composé qui est fonction des signaux d'entrée lus sur les adresses locales des dispositifs à mémoire ;

caractérisé en ce que l'étape de codage des dites valeurs emploie un code redondant tel que la relation fonctionnelle entre la distance de Hamming normalisée et la distance de signal normalisée, présente une pente moyenne qui est supérieure à 1 pour des distances de signal s'élevant jusqu'à un niveau choisi à l'avance et au moins égal à 10% de la distance de signal maximale.

**15.** Méthode de reconnaissance des formes, comprenant :

la réception d'un ensemble de valeurs numériques d'entrée représentant une forme à reconnaître ;

le codage des valeurs du signal numérique entrant pour obtenir des valeurs dans un signal entrant codé qui constituent une représentation numérique de l'ensemble reçu de valeurs dans le signal numérique entrant ;

l'adressage d'un ensemble de dispositifs de mémorisation de signaux numériques possédant chacun au moins une ligne d'adresse permettant d'atteindre des adresses locales incluses, ces lignes d'adresse recevant des bits de la part de ladite représentation numérique ; et

la réception de signaux de données numériques de la part des dits dispositifs à mémoire, et la production d'un signal de sortie numérique composé qui est fonction des signaux d'entrée lus sur les adresses locales des dispositifs à mémoire ;

caractérisé en ce que l'étape de codage des dites valeurs utilise un code employant un nombre de bits qui est

i) supérieur à celui requis par un simple code binaire pour représenter le même nombre de niveaux de signal ; et

ii) inférieur à ce nombre de niveaux de signal ;

la relation fonctionnelle pour ce code entre la distance de Hamming normalisée des valeurs du signal d'entrée codé, et la distance normalisée des valeurs du signal d'entrée, étant plus monotone que dans le cas du simple code binaire.

Fig. 1. (PRIOR ART)

INPUT SIGNAL

PARTIAL RESPONSES

RAM

2

2

Σ

3

TOTAL ESTIMATE

+

−

4

RECEIVED VALUE

UPDATE VALUE

CORRECTED VALUE

1

Fig. 2.

SAMPLED FUNCTION INTERPOLATION KERNEL CONTINUOUS FUNCTION

x ——→    *    x ——→    =    x ——→

## Fig. 3.

BAR CHART CODE

$x_1$    $x_2$

n-TUPLE

## Fig. 4a

PATTERN SPACE

$x_2$

$x_1$ ——→

DECISION LINES CREATED
BY EACH CONNECTION

## Fig. 4b

## Fig. 5a

*Fig. 5b*

*Fig. 5c*

*Fig. 5d*

*Fig. 6.*

*Fig. 7.*

*Fig. 8a*

*Fig. 8b*

*Fig. 8c*

Fig. 8d

Fig. 8e